# EUROPÄISCHE PATENTSCHRIFT

(11) **EP 4 155 148 B1**
(45) Veröffentlichungstag und Bekanntmachung des Hinweises auf die Patenterteilung: **31.12.2025**
(21) Anmeldenummer: 22179448.0
(22) Anmeldetag: 16.06.2022
(51) Int. Cl.: B60W 30/04, B62D 6/00

(54) **VERFAHREN UND STEUERVORRICHTUNG ZUM VERMEIDEN EINES KIPPENS EINES KRAFTFAHRZEUGS MIT STEER-BY-WIRE LENKUNG UND KRAFTFAHRZEUG**
MOTOR VEHICLE AND METHOD AND CONTROL DEVICE FOR AVOIDING TILTING OF A MOTOR VEHICLE WITH STEER-BY-WIRE STEERING
PROCÉDÉ ET DISPOSITIF DE COMMANDE PERMETTANT D'ÉVITER UN BASCULEMENT D'UN VÉHICULE AUTOMOBILE POURVU DE DIRECTION À COMMANDE PAR CÂBLE ET VÉHICULE AUTOMOBILE

(30) Priorität: 09.07.2021 DE 102021207263
(43) Veröffentlichungstag der Anmeldung: 29.03.2023
(73) Patentinhaber: VOLKSWAGEN AG, 38440 Wolfsburg (DE)
(72) Erfinder: Bärecke, Frank, 38444 Wolfsburg (DE); Dreyer, Dirk, 31655 Stadthagen (DE); Fischer, Uwe, 30855 Langenhagen (DE); Kolms, Thomas, 38553 Wasbüttel (DE); Ullrich, Manfred, 30982 Pattensen - Vardegötzen (DE)

(56) Entgegenhaltungen:
- EP-A1- 3 738 861
- WO-A1-2007/073772
- DE-A1- 10 235 026
- DE-A1- 102008 012 007
- DE-A1- 102014 202 230

## Beschreibung

Die vorliegende Erfindung betrifft ein Verfahren und eine Steuervorrichtung für ein Kraftfahrzeug zum Vermeiden eines Kippens des Kraftfahrzeugs. Die Erfindung betrifft weiter ein entsprechend eingerichtetes Kraftfahrzeug.

Insbesondere beim manuellen Führen eines Kraftfahrzeugs besteht die Gefahr, dass dieses zur Seite hin umkippen kann. Dies kann beispielsweise durch zu starke Lenkeingriffe bei zu großer Geschwindigkeit, zu plötzliche mehrfache Richtungs- und Querlastwechsel, also ein Aufschaukeln oder dergleichen verursacht werden. Im Sinne einer verbesserten Sicherheit gibt es daher bereits Ansätze zur Stabilisierung von Kraftfahrzeugen, um ein solches Umkippen durch automatische Steuereingriffe zu vermeiden. Ebenso kann es problematisch sein, wenn ein Kraftfahrzeug mit einem Teil seiner Räder auf ein Bankett neben einer Fahrbahn gerät, es also zu einer Bankettfahrt kommt. Für diesen Fall beschreibt die EP 3 738 861 A1 ein Verfahren zum Beenden einer Bankettfahrt eines Kraftfahrzeugs. Darin wird bei einer erkannten Bankettfahrt eine Lenkintensität eines manuellen Lenkmanövers bestimmt. Abhängig davon wird dem Lenkmanöver dann eine von wenigstens zwei vorgegebenen Lenkkennzahlen zugeordnet. Weiter wird abhängig davon mittels einer Steuereinheit des Kraftfahrzeugs ein automatischer Eingriff in eine Fahrzeugsteuerung vorgenommen. Mit diesem Konzept kann ein schnelles, sicheres und zuverlässiges Beenden der Bankettfahrt ermöglicht werden.

In der DE 10 2014 202 230 A1 ist ein Verfahren zum Verhindern eines Kippens eines lenkbaren, insbesondere eines hinterradgelenkten, Fahrzeugs beschrieben. Darin wird ein Kippkriterium unter Verwendung eines Lenkwinkels und eine Geschwindigkeit des Fahrzeugs bestimmt. Es wird dann ein Korrektursignal für den Lenkwinkel bereitgestellt, wenn das Kippkriterium eine Kippgefahr für das Fahrzeug repräsentiert. Das Korrektursignal repräsentiert dabei eine geringere Auslenkung zumindest eines lenkbaren Rades des Fahrzeugs als der Lenkwinkel, um das Kippen zu verhindern.

Als weiterer Ansatz ist in der DE 10 2005 046 776 A1 eine Wankstabilisierung unter Verwendung eines Vierradantriebs beschrieben. Konkret ist dort ein Verfahren zum Steuern eines Fahrzeugs mit einem 4x4-Antriebssystem offenbart. Darin soll ein potenzieller Überrollzustand bestimmt und Antriebsdrehmoment mittels eines elektronisch gesteuerten Mitteldifferenzialgetriebes oder eines elektronisch gesteuerten Verteilergetriebes an die Vorderräder übertragen werden, um ein Überholen zu verhindern.

In der DE 10 2018 101 182 A1 ist ein Verfahren zum Vermeiden von Überschlägen eines Kraftfahrzeugs bei Querlastwechsel mittels Torque-Vectoring beschrieben. Das Kraftfahrzeug weist dort einen Einzelradantrieb auf, der dazu ausgebildet ist, ein durch den Querlastwechsel belastetes Rad unabhängig von dem wenigstens einen anderen Rad des Kraftfahrzeugs anzutreiben. In dem dort beschriebenen Verfahren soll ein kritischer Zustand des Kraftfahrzeugs bei Querlastwechsel erkannt werden. Weiter soll ein Antriebsdrehmoment durch einen Einzelradantrieb auf das durch den Querlastwechsel belastete Rat derart aufgebracht werden, das das durch den Querlastwechsel belastete Rad in Schlupf gebracht wird. Weiter ist ein Einlenken des durch den Querlastwechsel belasteten Rades in Richtung einer Fahrtrichtung derart, dass ein Überschlagen des Kraftfahrzeugs verhindert werden kann, vorgesehen.

Aufgabe der vorliegenden Erfindung ist es, ein besonders sicheres Fahrverhalten eines Kraftfahrzeugs bei gleichzeitig besonders großer Fahrdynamik zu ermöglichen.

Diese Aufgabe wird erfindungsgemäß durch die Gegenstände der unabhängigen Patentansprüche gelöst. Mögliche Ausgestaltungen und Weiterbildungen der vorliegenden Erfindung sind in den abhängigen Patentansprüchen offenbart.

Das erfindungsgemäße Verfahren dient zum Vermeiden eines Kippens eines Kraftfahrzeugs, das eine elektrische Lenkung ohne mechanische Verbindung zwischen einem Lenkrad bzw. einer Lenkhandhabe und gelenkten Rädern des Kraftfahrzeugs aufweist. Mit anderen Worten ist das Verfahren also für Kraftfahrzeuge anwendbar, die eine sogenannte Steer-by-Wire Lenkung aufweisen. In einem Verfahrensschritt des erfindungsgemäßen Verfahrens werden automatisch vorgegebene Parameter, die eine jeweils aktuelle Fahrsituation des Kraftfahrzeugs beschreiben, überwacht. Diese Parameter bzw. deren Parameterwerte werden dann automatisch anhand vorgegebener Kriterien auf eine Kippgefahr des Kraftfahrzeugs hin analysiert. Als diese Parameter können beispielsweise ein Lenkwinkel, eine Rate oder Geschwindigkeit einer Veränderung des Lenkwinkels, eine Fahrgeschwindigkeit, ein Kippwinkel bei einer Rollbewegung des Kraftfahrzeugs um eine Fahrzeuglängsachse, ein Betriebszustand einer Bremseinrichtung, ein radspezifischer Schlupf und/oder dergleichen mehr vorgegeben sein bzw. überwacht werden. Die für das Analysieren vorgegebenen Kriterien können beispielsweise ein Erreichen oder Überschreitet eines Schwellenwertes durch einen oder mehrere der Parameterwerte oder durch eine aus einem oder mehreren Parameterwerten berechnete Größe und/oder dergleichen sein oder umfassen. Das Überwachen und Analysieren kann während eines Betriebs des Kraftfahrzeugs kontinuierlich oder regelmäßig wiederholt, also dauerhaft durchgeführt werden.

Eine Kippgefahr im vorliegenden Sinne kann insbesondere dann bestehen, wenn ein gemäß den jeweils aktuellen Parameterwerten extrapolierter oder fortgesetzter Betrieb des Kraftfahrzeugs ohne korrigierende Steuereingriffe voraussichtlich zu einem Kippen oder einer oberhalb eines vorgegebenen Eingriffsschwellenwertes liegenden Kippwahrscheinlichkeit führen würde.

In einem weiteren Verfahrensschritt des erfindungsgemäßen Verfahrens wird bei einer derart erkannten Kippgefahr eine vorgegebene abgestufte Kaskade aus mehreren unterschiedlichen automatischen Steuereingriffen zur Beeinflussung der Fahrsituation des Kraftfahrzeugs - also insbesondere eines oder mehrerer der vorgegebenen Parameter - zeitlich nacheinander von Stufe zu Stufe der Kaskade eskalierend ausgeführt bis keine Kippgefahr mehr besteht bzw. bis die Kippwahrscheinlichkeit kleiner als ein dafür vorgegebener Sicherheitsschwellenwert ist. Mit anderen Worten können also nach und nach unterschiedliche bzw. weitere Steuereingriffe automatisch veranlasst oder ausgeführt werden, um in stärker werdender oder aggressiverer Weise dem möglichen Kippen bzw. der Kippgefahr automatisch entgegenzuwirken.

Die vorgegebene Kaskade sieht dabei in einer ersten Stufe eine Begrenzung einer Lenkgeschwindigkeit der elektrischen Lenkung auf einen vorgegebenen Maximalwert vor. In oder bei Aktivierung der ersten Stufe kann also eine Begrenzung einer maximalen Änderungsrate des Lenkwinkels, zumindest in Richtung eines kleineren Kurvenradius, veranlasst oder eingestellt werden. Damit kann ein Aufschaukeln des Kraftfahrzeugs durch Lenkeingriffe, Querlastwechsel und/oder kleiner werdende Kurvenradien vermieden oder gedämpft werden. Die hier in der ersten Stufe vorgesehene Begrenzung der Lenkgeschwindigkeit kann einen relativ schwachen oder sanften Steuereingriff darstellen, beispielsweise im Vergleich zu einem automatischen Verändern des Lenkwinkels oder einem relativ starken automatischen Bremseingriff, wie er beispielsweise bei herkömmlichen ESC- oder rein bremsbasierten Kippvermeidungssystemen vorgesehen ist. Die erste Stufe der Kaskade kann hier insbesondere zu einem früheren Zeitpunkt vor dem voraussichtlichen Kippen des Kraftfahrzeugs bzw. bereits bei geringerer Kippwahrscheinlichkeit veranlasst oder ausgeführt werden als ein solcher herkömmlich vorgesehener Bremseingriff. Dies wird ermöglicht, da die Beeinflussung oder Steuerung der elektrischen Lenkung eine zusätzliche Maßnahme darstellt, sodass nicht als erste und einzige Maßnahme bereits ein Bremseingriff erfolgen muss. Die Begrenzung der Lenkgeschwindigkeit ist hier durch entsprechende elektrische oder elektronische Ansteuerung der elektrischen Lenkung besonders einfach und für einen Fahrer des Kraftfahrzeugs transparent realisierbar.

Die vorgegebene Kaskade sieht in einer zweiten Stufe eine Begrenzung eines Lenkwinkels der elektrischen Lenkung auf einen vorgegebenen ersten Maximallenkwinkel vor. Mit anderen Worten kann hier durch einen entsprechenden Steuereingriff in die elektrische Lenkung verhindert werden, dass ein Lenkwinkel, der größer als der erste Maximallenkwinkel ist, also zu einem kleineren Kurvenradius führen würde, durch einen Fahrer des Kraftfahrzeugs durch manuelle Bedienung oder Betätigung des Lenkrads eingestellt wird. Dadurch kann beispielsweise das Aufschaukeln des Kraftfahrzeugs durch wiederholte gegensätzliche Lenkbewegungen noch effektiver vermieden oder gedämpft werden. Falls der tatsächliche Lenkwinkel beim Aktivieren der zweiten Stufe bzw. der Steuereingriffe der zweiten Stufe größer als der erste Maximallenkwinkel ist, kann der tatsächliche Lenkwinkel hier zudem automatisch auf den ersten Maximallenkwinkel reduziert oder zurückgenommen werden.

Die vorgegebene Kaskade sieht in einer dritten Stufe eine Begrenzung des Lenkwinkels auf einen vorgegebenen kleineren zweiten Maximallenkwinkel vor. Dieser zweite Maximallenkwinkel ist also kleiner als der erste Maximallenkwinkel, sodass der zweite Maximallenkwinkel einem größeren Kurvenradius des Kraftfahrzeugs entspricht als der erste Maximallenkwinkel. Sofern der tatsächliche Lenkwinkel größer als der zweite Maximallenkwinkel ist, wird der tatsächliche Lenkwinkel in der dritten Stufe durch einen entsprechenden aktiven Steuereingriff zumindest bis auf den zweiten Maximallenkwinkel reduziert. Dadurch kann eine Kippbewegung, also ein Rollen des Kraftfahrzeugs um eine Fahrzeuglängsachse, gedämpft oder unterdrückt werden. Die dritte Stufe der Kaskade kann beispielsweise angewendet oder getriggert werden, wenn eine solche - insbesondere eine vorgegebene Schwelle überschreitende - Kippbewegung des Kraftfahrzeugs detektiert wird. In der dritten Stufe ist weiter ein automatischer aktiver Bremseingriff zum Reduzieren einer Fahrgeschwindigkeit des Kraftfahrzeugs vorgesehen. Dadurch, dass hier zur Kippvermeidung nicht nur ein solcher aktiver Bremseingriff angewendet wird, sondern auch die elektrische Lenkung durch die beschriebenen Steuereingriffe beeinflusst wird, kann der hier vorgesehene aktive Bremseingriff später erfolgen als ein Bremseingriff zur Kippvermeidung eines herkömmlichen nur ESC- oder bremsbasierten Kippvermeidungssystems.

Der erste und/oder der zweite Maximallenkwinkel kann fest vorgegeben sein oder situationsabhängig bzw. dynamisch angepasst oder vorgegeben werden, beispielsweise in Abhängigkeit von einer Geschwindigkeit, einer Fahrbahnneigung und/oder dergleichen mehr. So kann beispielsweise der Maximallenkwinkel bei größerer Geschwindigkeit des Kraftfahrzeugs kleiner sein bzw. reduziert werden und/oder bei größerer Fahrbahnneigung in Fahrzeugquerrichtung, insbesondere asymmetrisch für beide Lenkrichtungen, reduziert werden. So kann beispielsweise eine Reduzierung des Maximallenkwinkels nur bei hangaufwärts gerichteter Lenkrichtung vorgesehen oder aktiviert werden oder für die hangaufwärts gerichtete Lenkrichtung größer sein als für die hangabwärts gerichtete Lenkrichtung. Dadurch kann eine effektive Kippvermeidung mit minimaler Beeinträchtigung der manuellen Steuerbarkeit bzw. des manuellen Steuerumfangs des Kraftfahrzeugs erreicht werden.

Im Vergleich zu herkömmlichen, rein ESC- oder bremseingriffsbasierten Kippvermeidungssystemen kann die vorliegende Erfindung einen früheren Steuereingriff zur Kippvermeidung vorsehen, der jedoch weniger stark in das Fahrverhalten des Kraftfahrzeugs eingreifen kann. Damit ermöglicht die vorliegende Erfindung ein besonders lineares Fahrverhalten des Kraftfahrzeugs in einem besonders weiten Grenzbereich, in dem eine zur Ausführung des erfindungsgemäßen Verfahrens eingerichtete Steuervorrichtung des Kraftfahrzeugs zur Kippvermeidung eingreift. Durch die vorliegende Erfindung kann also eine sprunghafte Veränderung des Fahrverhaltens des Kraftfahrzeugs vermieden oder reduziert werden. Dadurch kann ein verbesserter Fahr- oder Nutzungskomfort sowie eine bessere oder einfachere Beherrschbarkeit des Kraftfahrzeugs im Grenzbereich erreicht werden. Zudem kann durch das frühere Eingreifen eine verbesserte Sicherheit erreicht werden.

Zur verbesserten Sicherheit trägt auch die Kombination mehrerer unterschiedlicher Arten von Steuereingriffen, nämlich der Steuereingriffe in die elektrische Lenkung und des zumindest in der dritten Stufe vorgesehenen Bremseingriffs, bei. Durch diese vorgesehene Kombination mehrerer unterschiedlicher Arten von Steuereingriffen kann ein größeres Korrekturpotenzial realisiert oder ausgeschöpft und dadurch eine höhere Fahrdynamik, also ein größerer Lenkwinkel, eine größere Fahrgeschwindigkeit und/oder ein größerer Kippwinkel des Kraftfahrzeugs, im Grenzbereich zugelassen werden, ohne dass dadurch die Sicherheit des Kraftfahrzeugs reduziert würde. Insbesondere kann die dritte bzw. höchste Stufe der Kaskade von Steuereingriffen deutlich später einsetzen als bei Stabilisierungssystemen ohne Steer-by-Wire-Unterstützung, da mit entsprechenden rein ESC- oder bremsbasierten Steuereingriffen in einer entsprechenden kritischen Situation ein kurvenäußeres Vorderrad des Kraftfahrzeugs gegebenenfalls nicht mehr ausreichend abgebremst werden kann und daher eine darauf basierende herkömmliche Kippvermeidung entsprechend früher eine Vollbremsung dieses Rades einleiten muss, um das Kippen des Kraftfahrzeugs zu vermeiden.

Das erfindungsgemäß zusätzlich vorgesehene Begrenzen und gegebenenfalls Reduzieren des Lenkwinkels kann hier aufgrund der elektrischen Ausgestaltung oder Steuerung der Lenkung - beispielsweise im Vergleich zu rein mechanischen Lenksystemen - schneller erfolgen und damit entsprechend später aktiviert werden und dennoch das Kippen des Kraftfahrzeugs vermeiden.

In einer möglichen Ausgestaltung der vorliegenden Erfindung sieht die vorgegebene Kaskade in der ersten Stufe und/oder in der zweiten Stufe auch einen automatischen aktiven Bremseingriff vor, der schwächer ist als der in der dritten Stufe vorgesehene automatische aktive Bremseingriff. Durch einen solchen abgeschwächten Bremseingriff zu einem entsprechend früheren Zeitpunkt kann die Bewegungsenergie des Kraftfahrzeugs besonders früh reduziert werden, wodurch das Aufschaukeln des Kraftfahrzeugs entsprechend früh vermieden oder gedämpft werden kann. Dadurch, dass dieser abgeschwächte Bremseingriff entsprechend früh erfolgt, kann er schwächer als der in der dritten Stufe vorgesehene Bremseingriff ausfallen und dadurch ein abruptes oder sprunghaftes automatisch veranlasstes Verändern des Fahrverhaltens oder Fahrzustands des Kraftfahrzeugs vermeiden. Somit kann durch die hier vorgeschlagene Ausgestaltung der vorliegenden Erfindung nicht nur eine verbesserte Sicherheit, sondern auch ein verbesserter Komfort sowie gegebenenfalls eine verbesserte Akzeptanz der automatischen Steuerung des Kraftfahrzeugs zur Kippvermeidung, also eines entsprechenden Fahrassistenzsystems, erreicht werden. Falls in allen Stufen der Kaskade ein jeweiliger aktiver Bremseingriff vorgesehen ist, kann dieser von Stufe zu Stufe stärker werden, wodurch eine besonders gleichmäßige oder lineare Veränderung des Fahrverhaltens des Kraftfahrzeugs trotz der abgestuften Kaskade von Steuereingriffen erreicht oder unterstützt werden kann.

In einer weiteren möglichen Ausgestaltung der vorliegenden Erfindung sieht die vorgegebene Kaskade in wenigstens einer Stufe auch eine Begrenzung einer Reaktion des Kraftfahrzeugs auf ein Beschleunigungssignal eines Fahrers des Kraftfahrzeugs vor. Mit anderen Worten kann also eine Gasannahme des Kraftfahrzeugs oder eine Leistungsabgabe aus einer Traktionsbatterie des Kraftfahrzeugs auf eine entsprechende Bedienhandlung, beispielsweise ein Durchtreten eines Gas- oder Beschleunigungspedals des Kraftfahrzeugs durch den Fahrer, begrenzt oder im Vergleich zu einem Normalbetrieb außerhalb des Grenzbereichs reduziert werden. Auf diese Weise kann ein Aufbauen zusätzlicher Bewegungsenergie, die zu einem weiteren, verstärkten oder schnelleren Aufschaukeln des Kraftfahrzeugs führen könnte, besonders einfach und effektiv vermieden werden. Dabei kann eine solche Begrenzung der Reaktion ein weniger starker oder weniger abrupter Eingriff in das Fahrverhalten oder den Fahrzustand des Kraftfahrzeugs sein als beispielsweise ein aktiver Bremseingriff. Durch die hier vorgeschlagene Begrenzung der Reaktion des Kraftfahrzeugs kann also ebenfalls eine Vergleichmäßigung oder Linearisierung des Fahrverhaltens des Kraftfahrzeugs im Grenzbereich bzw. über die mehreren Stufen der Kaskade hinweg erreicht werden, was die Sicherheit und Beherrschbarkeit des Kraftfahrzeugs sowie dessen Komfort verbessern kann. Wie an anderer Stelle im Zusammenhang mit den Bremseingriffen beschrieben, können in einer oder mehreren Stufen der Kaskade entsprechende Begrenzungen vorgesehen sein. Diese Begrenzungen können dabei von Stufe zu Stufe stärker werden. In einer möglichen Weiterbildung der vorliegenden Erfindung kann die vorgegebene Kaskade in der ersten Stufe und/oder in der zweiten Stufe also eine schwächere erste Begrenzung der Reaktion und in der dritten Stufe eine stärkere zweite Begrenzung der Reaktion vorsehen. So kann beispielsweise in der ersten Stufe die Reaktion auf das Beschleunigungssignal bzw. eine Wirkung des Beschleunigungssignal auf etwa 50 %, in der zweiten Stufe auf beispielsweise etwa 25 % und/oder in der dritten Stufe beispielsweise auf etwa 0 % bis 10 % reduziert oder begrenzt werden. Ebenso sind andere Werte oder Abstufungen möglich, beispielsweise je nach Auslegung oder Anforderungsprofil für einen jeweiligen Einsatzzweck. Durch die hier vorgeschlagene Begrenzung der Reaktion des Kraftfahrzeugs auf das Beschleunigungssignal steht eine weitere Steuerungs- oder Eingriffsmöglichkeit zum Vermeiden des Kippens des Kraftfahrzeugs zur Verfügung, wodurch insgesamt eine verbesserte Sicherheit und ein verbesserter Komfort des Kraftfahrzeugs erreicht werden kann.

In einer weiteren möglichen Ausgestaltung der vorliegenden Erfindung erfolgt die automatische Eskalation von Stufe zu Stufe der Kaskade in vorgegebener Abhängigkeit von einem voraussichtlichen Kippzeitpunkt, zu dem das Kraftfahrzeug ohne Steuereingriff voraussichtlich kippen würde. Mit anderen Worten kann also beispielsweise eine Zuordnung vorgegeben sein, die angibt, in welchem zeitlichen Abstand zu dem Kippzeitpunkt welche Stufe bzw. die Maßnahmen oder Steuereingriffe welcher Stufe automatisch anzuwenden oder auszulösen sind. Dabei kann insbesondere vorgesehen sein, dass bei einem gegebenen zeitlichen Abstand zu dem Kippzeitpunkt jeweils die höchste bis zu diesem Zeitpunkt gemäß der vorgegebenen Zuordnung auszuführende oder anzuwendende Stufe ausgeführt oder angewendet wird. Niedrigere Stufen können dann also bei Bedarf übersprungen werden, wenn der erste bestimmte zeitliche Abstand zu dem Kippzeitpunkt bereits die Anwendung oder Ausführung einer höheren Stufe vorsieht. Durch die hier vorgeschlagene Ausgestaltung der vorliegenden Erfindung kann zum einen - zumindest in den meisten Fällen - ein besonders gut vorhersagbares, also über mehrere drohende Kippereignisse hinweg gleiches Verhalten des Kraftfahrzeugs und zum anderen eine verbesserte Sicherheit erreicht werden. Letzteres ist der Fall, da in kritischen Situationen hier nicht notwendigerweise zunächst die Steuereingriffe einer niedrigeren Stufe ausgeführt oder durchlaufen werden müssen.

In einer weiteren möglichen Ausgestaltung der vorliegenden Erfindung wird mittels einer Sensorik des Kraftfahrzeugs dieses auf ein Abheben eines oder mehrerer Räder von einem befahrenen Untergrund überwacht und die Kaskade in Abhängigkeit davon angewendet. Hier kann beispielsweise die Sensorik einer adaptiven Fahrwerksregelung (englisch: Dynamic Chassis Control, DCC) und/oder beispielsweise einer Leuchtweitenregulierung des Kraftfahrzeugs verwendet werden. Das Abheben wenigstens eines Rades von dem befahrenen Untergrund kann beispielsweise durch Beobachten oder Überwachen eines Einfederungszustands des Kraftfahrzeugs bzw. eines entsprechenden Teils der Sensorik oder einer Dämpfereinrichtung des Kraftfahrzeugs erkannt werden. Das Anwenden der Kaskade von Steuereingriffen kann beispielsweise abhängig von einem Ergebnis der Überwachung bzw. abhängig von einem detektierten Abheben eines oder mehrerer Räder erfolgen. Dies kann beispielsweise bedeuten, dass bei einem erkannten Abheben oder in Abhängigkeit von einem Maß oder Grad eines solchen Abhebens vorgegebene Schwellenwerte, beispielsweise für Eingriffsschwellen, die genannten Begrenzungen oder Maximallenkwinkel und/oder dergleichen mehr angepasst, insbesondere verschärft, werden können und/oder bei einem detektierten Abheben oder wenn ein detektiertes Abheben eine vorgegebene Schwelle erreicht oder überschreitet automatisch zur nächsten Stufe der Kaskade eskaliert wird.

Das Anpassen der Schwellenwerte, Begrenzungen, Maximallenkwinkel und/oder dergleichen mehr kann beispielsweise nur für die jeweils aktuelle Fahr- oder Kippgefahrsituation oder dauerhaft erfolgen. In letzterem Fall kann so beispielsweise ein automatisches Anpassen des Verfahrens auf ein individuelles Verhalten oder individuelle Eigenschaften des jeweiligen Kraftfahrzeugs, also ein automatisches Lernen dieses Verhaltens oder dieser Eigenschaften realisiert werden. So können beispielsweise automatisch nutzerseitige Modifikationen des Kraftfahrzeugs oder dergleichen, die das Fahr- oder Kippverhalten des Kraftfahrzeugs beeinflussen können, berücksichtigt werden.

Die hier vorgeschlagene Verwendung der Sensorik zum Erkennen des Abhebens eines oder mehrerer Räder des Kraftfahrzeugs ermöglicht eine besonders genaue und zuverlässige Bestimmung der Kippgefahr, da beispielsweise nicht allein aufgrund der Fahrgeschwindigkeit und des aktuellen Lenkwinkels auf die Kippgefahr geschlossen werden muss, während andere Einflussgrößen, wie beispielsweise Eigenschaften eines befahrenen Untergrundes, Seitenwindeinflüsse, eine Beladung des Kraftfahrzeugs und/oder dergleichen mehr, unberücksichtigt bleiben. Vielmehr kann durch die Sensorik hier ein für das mögliche Kippen tatsächlich relevanter aktueller Zustand des Kraftfahrzeugs erfasst oder berücksichtigt werden. Die Verwendung der adaptiven Fahrwerksregelung und/oder der Leuchtweitenregulierung bzw. deren Sensorik ermöglicht eine besonders effiziente, insbesondere bauteil- und kostensparende, Realisierung der vorliegenden Erfindung durch eine entsprechende Doppelnutzung der Sensorik.

In einer weiteren möglichen Ausgestaltung der vorliegenden Erfindung wird mittels einer Beschleunigungssensorik und/oder mittels einer Rotationssensorik des Kraftfahrzeugs eine Kippbewegung des Kraftfahrzeugs erfasst oder überwacht. Eine Anwendung der Kaskade wird dann in Abhängigkeit von der erfassten Kippbewegung feingesteuert. Dies kann beispielsweise bedeuten, dass für die Steuereingriffe bzw. entsprechende Eingriffsstärken, Schwellenwerte, Begrenzungen, Maximallenkwinkel und/oder dergleichen mehr, der einzelnen Stufen ein jeweiliges Steuerungs- oder Regelungsintervall um den jeweiligen Wert herum vorgegeben ist und die Steuereingriffe innerhalb dieser Intervalle gesteuert oder geregelt bzw. verschoben werden können. Die Steuerungs- oder Regelungsintervalle unterschiedlicher Stufen können dabei insbesondere überlappungsfrei sein. Durch das hier vorgeschlagene Feinsteuern der Kaskade bzw. der Anwendung der Kaskade, also der Ausführung der entsprechenden Steuereingriffe, kann erreicht werden, dass die Steuereingriffe jeweils so eingestellt oder ausgeführt werden, dass die Kippbewegung des Kraftfahrzeugs nur oder genau so weit wie zur Vermeidung des Kippens oder zum Erreichen oder Einstellen eines bestimmten vorgegebenen oder besonders gleichmäßigen oder konsistenten Verhaltens des Kraftfahrzeugs notwendig begrenzt oder gedämpft wird. So kann automatisch auf, insbesondere unvorhersagbare, situationsindividuelle Umstände oder Gegebenheiten durch entsprechende Anpassungen reagiert werden, wie beispielsweise eine gegebene Fahrbahnneigung, eine - gegebenenfalls ungleichmäßige - Beladung des Kraftfahrzeugs, ein Reifenluftdruck des Kraftfahrzeugs, nutzerseitige, das Fahrverhalten beeinflussende Modifikationen des Kraftfahrzeugs, Seitenwindverhältnisse oder -einflüsse und/oder dergleichen mehr. Auf diese Weise kann nicht nur ein in entsprechend unterschiedlichen Situationen möglichst gleichbleibendes Verhalten des Kraftfahrzeugs, sondern auch eine verbesserte Sicherheit durch einen angepassten oder anpassbaren Steuerungs- oder Regelumfang erreicht werden. Um die hier vorgeschlagene Ausgestaltung der vorliegenden Erfindung besonders effizient zu realisieren, kann beispielsweise die Sensorik einer adaptiven Fahrwerksregelung des Kraftfahrzeugs mitverwendet werden.

In einer weiteren möglichen Ausgestaltung der vorliegenden Erfindung wird eine Anwendung oder Ausführung der gemäß der Kaskade vorgesehenen unterschiedlichen Steuereingriffe durch einen Fahrdynamikregler des Kraftfahrzeugs automatisch koordiniert. Der Fahrdynamikregler ist dazu eingerichtet, zu simulieren, ob eine jeweils aktuelle Trajektorie des Kraftfahrzeugs mit jeweils aktuellen Betriebsparametern und/oder unter Anwendung bestimmter Steuereingriffe ohne Kippen des Kraftfahrzeugs befahrbar ist oder nicht. Der Fahrdynamikregler kann also beispielsweise ein Steuergerät sein oder umfassen, das dazu eingerichtet ist, beispielsweise unterschiedliche Steuereingriffe aufeinander abzustimmen, etwa hinsichtlich deren Stärke und/oder Ausführungs- oder Anwendungszeitpunkten und/oder Ausführungs- oder Anwendungsdauern. Der Fahrdynamikregler kann also die Einflüsse oder kombinierten Effekte unterschiedlicher Steuereingriffe auf das Fahr- oder Kippverhalten bzw. die Trajektorie des Kraftfahrzeugs berücksichtigen. Dies bzw. die jeweilige Simulation kann beispielsweise unter Berücksichtigung der Steuereingriffe jeweils einer bzw. der jeweils aktuellen Stufe oder unter Berücksichtigung der Steuereingriffe mehrerer Stufen bzw. über mehrere Stufen der Kaskade hinweg durchgeführt werden. Ergibt die Simulation, dass die aktuelle Trajektorie des Kraftfahrzeugs mit den jeweils aktuellen Betriebsparametern und/oder Steuereingriffen nicht ohne voraussichtliches Kippen oder ein nur mit einer oberhalb eines vorgegebenen Wahrscheinlichkeitsschwellenwertes liegenden Kippwahrscheinlichkeit befahren werden kann, können daraufhin durch den Fahrdynamikregler die Steuereingriffe ausgeführt oder angepasst werden, um das Kippen zu vermeiden bzw. die Kippwahrscheinlichkeit bis unterhalb des Wahrscheinlichkeitsschwellenwertes zu reduzieren. Dies kann beispielsweise auf Basis einer iterativen Simulation mit jeweils modifizierten Parametern, welche die Steuereingriffe, deren Stärke, Anwendungszeitpunkte und/oder Anwendungsdauer repräsentieren, realisiert werden. Durch die hier vorgeschlagene Koordination der unterschiedlichen vorgesehenen bzw. möglichen Steuereingriffe kann eine jeweils optimale oder besonders effektive Kombination der unterschiedlichen Steuereingriffe gefunden und angewendet werden. Dadurch kann nicht nur eine verbesserte Kippsicherheit, sondern beispielsweise auch eine verbesserte Beherrschbarkeit oder Steuerbarkeit des Kraftfahrzeugs erreicht werden. Beispielsweise kann eine kombinierte Anwendung mehrerer unterschiedlicher Steuereingriffe in einem jeweils mittigen Bereich ihrer Steuerungs- oder Regelungsintervalle mehr Flexibilität oder Reaktionsspielraum für weitere automatische oder manuell durch den Fahrer des Kraftfahrzeugs vorgenommene Steuereingriffe lassen als eine Anwendung eines oder mehrerer Steuereingriffe an einem Randbereich, also einem Ende oder Maximalwert seines Steuerungs- oder Regelungsintervalls.

Ein weiterer Aspekt der vorliegenden Erfindung ist ein Steuervorrichtung für ein Kraftfahrzeug. Die erfindungsgemäße Steuervorrichtung weist eine Schnittstelle zum Erfassen von Parameterwerten von Parametern, die eine jeweils aktuelle Fahrsituation oder einen jeweils aktuellen Fahrtzustand des Kraftfahrzeugs beschreiben, und zum Ausgeben von Steuersignalen zum Ansteuern des Kraftfahrzeugs auf. Dabei kann für das Erfassen und das Ausgeben eine einzige oder gemeinsame Schnittstelle oder eine Eingangsschnittstelle und eine separate Ausgangsschnittstelle vorgesehen sein. Weiter weist die erfindungsgemäße Steuervorrichtung eine Datenverarbeitungseinrichtung zum automatischen Verarbeiten der erfassten Parameterwerte zum Ermitteln einer Kippgefahr des Kraftfahrzeugs und zum Erzeugen der Steuersignale gemäß einer vorgegebenen Kaskade von Steuereingriffen auf. Die erfindungsgemäße Steuervorrichtung ist dabei zum automatischen Ausführen wenigstens einer Ausführungsform oder Variante des erfindungsgemäßen Verfahrens eingerichtet. Dazu kann die Datenverarbeitungseinrichtung eine Prozessoreinrichtung, etwa einen Mikroprozessor, Mikrochip oder Mikrocontroller, und einen damit verbundenen Datenspeicher aufweisen. Auf diesem Datenspeicher kann ein Betriebs- oder Computerprogramm gespeichert sein, das die im Zusammenhang mit dem erfindungsgemäßen Verfahren beschriebenen Abläufe, Maßnahmen oder Verfahrensschritte codiert oder implementiert und durch die Prozessoreinrichtung ausführbar ist, um die Ausführung des entsprechenden Verfahrens zu bewirken oder zu veranlassen. Die erfassten Parameterwerte können wie im Zusammenhang mit dem erfindungsgemäßen Verfahren beschrieben beispielsweise die Fahrgeschwindigkeit, den Lenkwinkel, Mess- oder Sensorwerte einer Beschleunigungssensorik, einer Rotationssensorik und/oder weiterer Sensoren des Kraftfahrzeugs und/oder dergleichen mehr sein oder angeben.

Ein weiterer Aspekt der vorliegenden Erfindung ist ein Kraftfahrzeug, das eine elektrische Lenkung ohne mechanische Verbindung zwischen einem Lenkrad oder einer Lenkhandhabe und gelenkten Rädern des Kraftfahrzeugs, also eine Steer-by-Wire Lenkung, eine steuerbare Bremseinrichtung und eine erfindungsgemäße Steuervorrichtung aufweist. Die Steuervorrichtung ist hier zum Ansteuern der elektrischen Lenkung und der Bremseinrichtung gemäß dem erfindungsgemäßen Verfahren eingerichtet, also beispielsweise entsprechend mit der Bremseinrichtung und der Steuervorrichtung verbunden oder gekoppelt. Das erfindungsgemäße Kraftfahrzeug kann zudem die an anderer Stelle genannten und/oder weitere mit der Steuervorrichtung gekoppelte Sensoren sowie einige oder alle und/oder weitere der genannten Einrichtungen, wie beispielsweise die adaptive Fahrwerksregelung, die Leuchtweitenregulierung, den Fahrdynamikregler und/oder dergleichen mehr, aufweisen. Das erfindungsgemäße Kraftfahrzeug kann insbesondere das im Zusammenhang mit dem erfindungsgemäßen Verfahren und/oder im Zusammenhang mit der erfindungsgemäßen Steuervorrichtung genannte Kraftfahrzeug sein. Dementsprechend kann das erfindungsgemäße Kraftfahrzeug einige oder alle der in diesen Zusammenhängen genannten Eigenschaften oder Merkmale aufweisen.

Weitere Merkmale der Erfindung können sich aus der nachfolgenden Figurenbeschreibung sowie anhand der Zeichnung ergeben.

Die Zeichnung zeigt in der einzigen Figur eine ausschnittweise schematische Darstellung eines Kraftfahrzeugs mit einer elektrischen Lenkung, das für eine automatische Kippvermeidung eingerichtet ist.

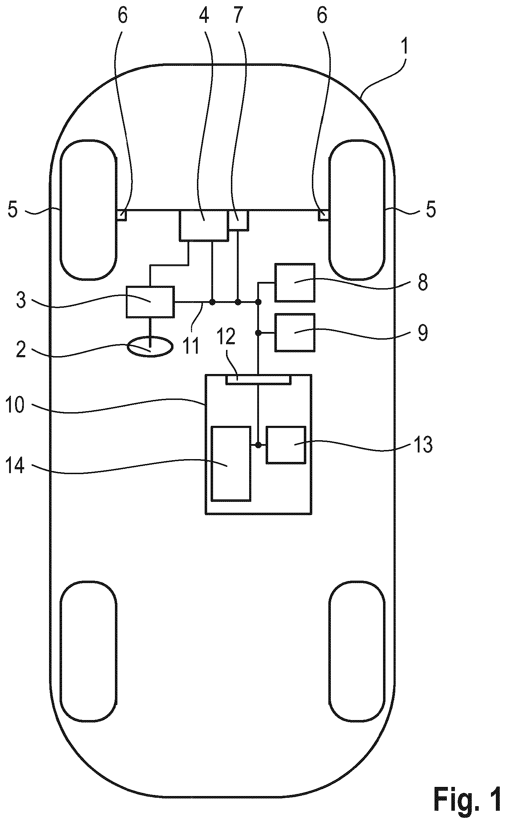

Fig. 1 zeigt eine ausschnittweise schematische Darstellung eines Kraftfahrzeugs 1, das eine elektrische Lenkung aufweist. Dabei ist ein Lenkrad 2 mit einem Lenksignalgeber 3 gekoppelt, der gemäß einer Bedienung oder Betätigung des Lenkrads 2 durch einen Fahrer des Kraftfahrzeugs 1 ein entsprechendes Lenksignal erzeugt an einen elektromechanischen Aktuator 4 übermittelt. Der elektromechanische Aktuator 4 setzt das Lenksignal jeweils in eine mechanische Lenkbewegung von gelenkten Rädern 5 des Kraftfahrzeugs 1 um.

Das Kraftfahrzeug 1 weist weiter eine Bremseinrichtung 6 auf, mittels welcher Räder, beispielsweise die gelenkten Rädern 5, gebremst werden können. Die Bremseinrichtung 6 kann hier ebenfalls durch den elektromechanischen Aktuator 4 ansteuerbar sein.

Weiter ist hier eine Fahrzustandssensorik 7 vorgesehen, die einen Fahrzustand des Kraftfahrzeugs 1, beispielsweise dessen aktuelle Geschwindigkeit und Lenkwinkel sowie einen Betriebs- oder Betätigungszustand der Bremseinrichtung 6, erfassen kann. Darüber hinaus weist das Kraftfahrzeug 1 hier eine Höhenstandssensorik 8 und eine Rotationssensorik 9 auf. Durch die Höhenstandssensorik 8 kann beispielsweise ein Abheben einzelner Räder des Kraftfahrzeugs 1 von einem jeweils befahrenen Untergrund überwacht oder erkannt werden, indem ein Einfederungszustand beobachtet wird. Kipp- oder Rollbewegungen des Kraftfahrzeugs 1, insbesondere um eine Fahrzeugmittellängsachse des Kraftfahrzeugs 1, können durch die Rotationssensorik 9 erfasst werden. Die Rotationssensorik 9 kann dazu beispielsweise einen dedizierten Rotationssensor und/oder einen oder mehrere Beschleunigungssensoren aufweisen.

Das Kraftfahrzeug 1 ist zudem mit einer Kippvermeidungseinrichtung 10 ausgestattet. Diese ist ebenso wie die weiteren genannten Komponenten hier schematisch an ein Bordnetz 11 angeschlossen, über das Daten, Signale und Steuerbefehle übertragen werden können.

Die Kippvermeidungseinrichtung 10 weist eine Schnittstelle 12 zum Erfassen von Daten oder Signalen einer oder mehrerer der übrigen genannten Einrichtungen, insbesondere des Lenksignalgebers 3, der Fahrzustandssensorik 7, der Höhenstandssensorik 8 und der Rotationssensorik 9, auf. Darüber erfasste Daten oder Signale können durch die Kippvermeidungseinrichtung 10 mittels eines Prozessors 13 und eines Datenspeichers 14 verarbeitet werden, um Signale oder Steuerbefehle zum Veranlassen von Steuereingriffen, also automatischen Steuerungen der elektrischen Lenkung und/oder der Bremseinrichtung 6, zu erzeugen. Diese Steuersignale können beispielsweise über die Schnittstelle 12 ausgegeben und über das Bordnetz 11 übertragen werden, etwa an den elektromechanischen Aktuator 4. Die Kippvermeidungseinrichtung 10 ist hier dazu eingerichtet, im Betrieb des Kraftfahrzeugs 1 automatisch ein vorgegebenes Verfahren auszuführen, um ein Kippen des Kraftfahrzeugs 1 zu vermeiden.

Sogenannte Rollovereingriffe, also Steuereingriffe zum Vermeiden des Kippens des Kraftfahrzeugs 1 oder zum Vermeiden oder Begrenzen des Abhebens eines oder mehrerer Räder des Kraftfahrzeugs 1, können durch die Kippvermeidungseinrichtung 10 automatisch durchgeführt oder veranlasst werden. Ein zeitliches Fenster zur Erkennung, ob ein solcher Rollovereingriff notwendig ist, ist dabei typischerweise relativ kurz. Soll das Kippen des Kraftfahrzeugs 1 dann nur unter Verwendung der Bremseinrichtung 6 vermieden werden, kann es daher zu sehr plötzlichen und starken Eingriffen bzw. Veränderungen des Verhaltens oder Fahrzustands des Kraftfahrzeugs 1 kommen. Um dies zu vermeiden, wird vorliegend auch die elektrische Lenkung in die Kippvermeidung mit eingebunden.

Zum einen können damit die Rollovereingriffe später als bei herkömmlichen Systemen in voller Tragweite oder Stärke zum Einsatz kommen, was insgesamt eine höhere Fahrdynamik erlaubt. Zum anderen können erste, relativ schwache, Rollovereingriffe bereits früher als bei herkömmlichen Systemen angewendet werden, wodurch sich ein Fahrverhalten des Kraftfahrzeugs 1 nicht sprunghaft ändert und das Kraftfahrzeug 1 in seinem Grenzbereich beherrschbar wird oder bleibt.

Dazu kann durch die Kippvermeidungseinrichtung 10 die elektrische Lenkung, insbesondere der elektromechanische Aktuator 4, angesteuert werden, um rolloverkritischen Situationen, in denen ein Kippen des Kraftfahrzeugs 1 ohne Steuereingriff bevorstehen kann, eine Lenkgeschwindigkeit zu begrenzen. Dadurch kann ein unnötiges Aufschaukeln des Kraftfahrzeugs 1 vermieden werden. Dies kann bereits zu einem relativ frühen Zeitpunkt, also in einer ersten Stufe einer vorgegebenen Kaskade von Steuer- oder Rollovereingriffen, erfolgen. Hier kann zudem bereits eine Gasannahme des Kraftfahrzeugs 1 reduziert oder begrenzt und/oder ein erster, relativ schwacher, Bremseingriff erzeugt werden, um eine Bewegungsenergie des Kraftfahrzeugs 1 zu reduzieren.

Zu einem späteren Zeitpunkt, beispielsweise in einer zweiten Stufe der Kaskade, kann eine situationsabhängige Begrenzung eines Lenkwinkels durch die Kippvermeidungseinrichtung 10 veranlasst werden, um ein Überlenken und Querbeschleunigungsspitzen zu vermeiden oder zu reduzieren. Dies kann durch eine Gasreduzierung und/oder einen Bremseingriff, also eine automatische Ansteuerung der Bremseinrichtung 6, unterstützt werden, um die Energie des Kraftfahrzeugs 1 weiter zu reduzieren.

Kommt es dennoch zu einer, insbesondere eine vorgegebene Schwelle erreichenden oder überschreitenden, Roll- oder Kippbewegung des Kraftfahrzeugs 1, kann dann, beispielsweise in einer dritten Stufe der Kaskade, durch die Kippvermeidungseinrichtung 10 eine weitere Begrenzung und/oder eine Rücknahme des Lenkwinkels bis zu einem vorgegebenen Maximallenkwinkel veranlasst werden, um die Kippbewegung zu unterdrücken. Dies wird hier mit einer ebenfalls durch die Kippvermeidungseinrichtung 10 veranlassten Fahrzeugverzögerung, also einem, insbesondere stärkeren, zweiten oder dritten Bremseingriff kombiniert. Dadurch kann erreicht werden, dass der Fahrer des Kraftfahrzeugs 1 weiter einer gewünschten Solltrajektorie folgen kann. Diese dritte Eingriffsstufe der Kaskade kann hier deutlich später, also deutlich näher an einem voraussichtlichen Kippzeitpunkt, einsetzen als eine finale Steuermaßnahme herkömmlicher Kippstabilisierungssysteme ohne Unterstützung oder Einbindung der Steer-by-Wire Lenkung.

Die beschriebenen Rollovereingriffe können hier durch einen Fahrdynamikregler, der beispielsweise in der Kippvermeidungseinrichtung 10 integriert oder implementiert sein kann, koordiniert werden. Durch diesen Fahrdynamikregler kann permanent simuliert werden, ob eine jeweils aktuelle Trajektorie des Kraftfahrzeugs 1 noch hinsichtlich eines Kippens des Kraftfahrzeugs 1 gefahrlos befahrbar ist oder ob bereits eine hinsichtlich des Kippens kritischen Situation vorliegt. Je nach zeitlichem Abstand zu einem entsprechenden kritischen Kippzeitpunkt, zu dem das Kippen des Kraftfahrzeugs 1 ohne Steuer- oder Rollovereingriff voraussichtlich erfolgen würde, können die beschriebenen Rollovereingriffe - gegebenenfalls durch den Fahrdynamikregler aneinander angepasst bzw. miteinander koordiniert oder aufeinander abgestimmt - eingeleitet werden. Die hier vorgesehene elektrische bzw. elektronische Ansteuerung der Lenkung sowie gegebenenfalls der Bremseinrichtung 6 ermöglicht es, das Kraftfahrzeug 1 noch relativ spät abzufangen und ein Umkippen oder ein Abheben eines Rades oder mehrerer Räder des Kraftfahrzeugs 1 zu verhindern.

In der hier beschriebenen Weise können automatische Kippvermeidungseingriffe durch entsprechendes Ansteuern der Steer-by-Wire Lenkung unterstützt werden. Es kann ein besonders frühes Verhindern des Aufschaukelns des Kraftfahrzeugs 1 durch Begrenzung der Lenkgeschwindigkeit und ein besonders frühes Verhindern von potenziellen kritischen Situationen durch Verhinderung eines Überlenkens erreicht werden. Dabei besteht eine relativ späte Eingriffsmöglichkeit bei sich anbahnender Rollbewegung des Kraftfahrzeugs 1, wodurch eine besonders hohe Fahrdynamik des Kraftfahrzeugs 1 auch im Grenzbereich zugelassen werden kann, ohne die Kippsicherheit des Kraftfahrzeugs 1 zu beeinträchtigen. Zudem kann über den gesamten Grenzbereich hinweg ein besonders lineares Fahrzeugverhalten des Kraftfahrzeugs 1 realisiert werden.

Insgesamt zeigen die beschriebenen Beispiele damit wie eine Agilisierung von Rolloververmeidungs- oder Kippstabilisierungsmanövern unter Verwendung einer Steer-by-Wire Lenkung eines Fahrzeugs realisiert werden kann.

### Bezugszeichenliste

- 1: Kraftfahrzeug
- 2: Lenkrad
- 3: Lenksignalgeber
- 4: elektromechanischer Aktuator
- 5: gelenkte Räder
- 6: Bremseinrichtung
- 7: Fahrzustandssensorik
- 8: Höhenstandssensorik
- 9: Rotationssensorik
- 10: Kippvermeidungseinrichtung
- 11: Bordnetz
- 12: Schnittstelle
- 13: Prozessor
- 14: Datenspeicher

## Patentansprüche

1. Verfahren zum Vermeiden eines Kippens eines Kraftfahrzeugs (1), das eine elektrische Lenkung (3, 4) ohne mechanische Verbindung zwischen einem Lenkrad (2) und gelenkten Rädern (5) des Kraftfahrzeugs (1) aufweist, in dem automatisch
- vorgegebene Parameter, die eine jeweils aktuelle Fahrsituation des Kraftfahrzeugs (1) beschreiben, überwacht und anhand vorgegebener Kriterien auf eine Kippgefahr hin analysiert werden,
- bei einer erkannten Kippgefahr eine vorgegebene abgestufte Kaskade aus mehreren unterschiedlichen automatischen Steuereingriffen zur Beeinflussung der Fahrsituation des Kraftfahrzeugs (1) zeitlich nacheinander von Stufe zu Stufe der Kaskade eskalierend ausgeführt wird bis keine Kippgefahr mehr besteht, wobei die Kaskade
- in einer ersten Stufe eine Begrenzung einer Lenkgeschwindigkeit der elektrischen Lenkung (3, 4) auf einen vorgegebenen Maximalwert,
- in einer zweiten Stufe eine Begrenzung eines Lenkwinkels der elektrischen Lenkung (3, 4) auf einen vorgegebenen ersten Maximallenkwinkel, und
- in einer dritten Stufe eine Begrenzung des Lenkwinkels auf einen vorgegebenen kleineren zweiten Maximallenkwinkel und, sofern der tatsächliche Lenkwinkel größer als der zweite Maximallenkwinkel ist, eine aktive Reduzierung des tatsächlichen Lenkwinkels zumindest bis auf den zweiten Maximallenkwinkel und einen aktiven Bremseingriff zum Reduzieren einer Fahrgeschwindigkeit des Kraftfahrzeugs (1)
vorsieht.

2. Verfahren nach Anspruch 1,
**dadurch gekennzeichnet, dass**
die Kaskade in der ersten Stufe und/oder in der zweiten Stufe auch einen aktiven Bremseingriff vorsieht, der schwächer ist als der in der dritten Stufe vorgesehene aktive Bremseingriff.

3. Verfahren nach einem der vorhergehenden Ansprüche,
**dadurch gekennzeichnet, dass**
die Kaskade in wenigstens einer Stufe auch eine Begrenzung einer Reaktion des Kraftfahrzeugs (1) auf ein Beschleunigungssignal eines Fahrers vorsieht.

4. Verfahren nach Anspruch 3,
**dadurch gekennzeichnet, dass**
die Kaskade in der ersten Stufe und/oder in der zweiten Stufe eine schwächere erste Begrenzung der Reaktion und in der dritten Stufe eine stärkere zweite Begrenzung der Reaktion vorsieht.

5. Verfahren nach einem der vorhergehenden Ansprüche,
**dadurch gekennzeichnet, dass**
die Eskalation von Stufe zu Stufe in Abhängigkeit von einem voraussichtlichen Kippzeitpunkt, zu dem das Kraftfahrzeug (1) ohne Steuereingriff voraussichtlich kippen würde, erfolgt.

6. Verfahren nach einem der vorhergehenden Ansprüche,
**dadurch gekennzeichnet, dass**
mittels einer Sensorik (8, 9) des Kraftfahrzeugs (1), insbesondere einer adaptiven Fahrwerksregelung und/oder einer Leuchtweitenregulierung, das Kraftfahrzeug (1) auf ein Abheben eines Rades von einem befahrenen Untergrund überwacht und die Kaskade in Abhängigkeit davon angewendet wird.

7. Verfahren nach einem der vorhergehenden Ansprüche,
**dadurch gekennzeichnet, dass**
mittels einer Beschleunigungssensorik (7, 8, 9), insbesondere einer adaptiven Fahrwerksregelung (8), und/oder mittels einer Rotationssensorik (9) des Kraftfahrzeugs (1) eine Kippbewegung des Kraftfahrzeugs (1) erfasst und eine Anwendung der Kaskade in Abhängigkeit von der erfassten Kippbewegung feingesteuert wird.

8. Verfahren nach einem der vorhergehenden Ansprüche,
**dadurch gekennzeichnet, dass**
eine Anwendung der gemäß der Kaskade vorgesehenen unterschiedlichen Steuereingriffe durch einen Fahrdynamikregler (10) des Kraftfahrzeugs (1) koordiniert wird, der dazu eingerichtet ist, zu simulieren, ob eine jeweils aktuelle Trajektorie des Kraftfahrzeug (1) mit jeweils aktuellen Betriebsparametern und/oder unter Anwendung bestimmter Steuereingriffe ohne Kippen des Kraftfahrzeugs (1) befahrbar ist oder nicht.

9. Steuervorrichtung (10) für ein Kraftfahrzeug (1), aufweisend eine Schnittstelle (12) zum Erfassen von Parameterwerten von Parametern, die eine jeweils aktuelle Fahrsituation des Kraftfahrzeugs (1) beschreiben, und zum Ausgeben von Steuersignalen zum Ansteuern des Kraftfahrzeugs (1), und eine Datenverarbeitungseinrichtung (13, 14) zum Verarbeiten der erfassten Parameterwerte zum Ermitteln einer Kippgefahr des Kraftfahrzeugs (1) und zum Erzeugen der Steuersignale gemäß einer vorgegebenen Kaskade von Steuereingriffen, wobei die Steuervorrichtung (10) zum automatischen Ausführen eines Verfahrens nach einem der vorhergehenden Ansprüche eingerichtet ist.

10. Kraftfahrzeug (1), aufweisend eine elektrische Lenkung (3, 4) ohne mechanische Verbindung zwischen einem Lenkrad (2) und gelenkten Rädern (5) des Kraftfahrzeugs (1), eine steuerbare Bremseinrichtung (6) und eine Steuervorrichtung (10) nach Anspruch 9, die zum Ansteuern der elektrischen Lenkung (3, 4) und der Bremseinrichtung (6) eingerichtet ist.

## Claims

1. Method for preventing a motor vehicle (1) from tipping over, which motor vehicle has an electric steering system (3, 4) in which there is no mechanical connection between a steering wheel (2) and steered wheels (5) of the motor vehicle (1), in which method
- predetermined parameters that each describe a current driving situation of the motor vehicle (1) are monitored and analyzed on the basis of predetermined criteria for a risk of tipping over,
- if a risk of tipping over is recognized, a predetermined stepped cascade consisting of a plurality of different automatic control interventions for influencing the driving situation of the motor vehicle (1) is executed sequentially, escalating from step to step of the cascade until there is no longer a risk of tipping over, wherein the cascade provides for
- in a first step, a limitation of a steering speed of the electric steering system (3, 4) to a predetermined maximum value,
- in a second step, a limitation of a steering angle of the electric steering system (3, 4) to a predetermined first maximum steering angle, and
- in a third step, a limitation of the steering angle to a predetermined smaller second maximum steering angle and, if the actual steering angle is greater than the second maximum steering angle, an active reduction of the actual steering angle at least to the second maximum steering angle and an active braking intervention for reducing a driving speed of the motor vehicle (1),
all of which is performed automatically.

2. Method according to claim 1,
**characterized in that**
the cascade also provides for, in the first step and/or in the second step, an active braking intervention which is lighter than the active braking intervention provided for in the third step.

3. Method according to either of the preceding claims,
**characterized in that**
the cascade also provides for, in at least one step, a limitation of a response of the motor vehicle (1) to an acceleration signal from a driver.

4. Method according to claim 3,
**characterized in that**
the cascade provides for a lesser first limitation of the response in the first step and/or in the second step and for a greater second limitation of the response in the third step.

5. Method according to any of the preceding claims,
**characterized in that**
the escalation from step to step is carried out on the basis of an expected tipping instant at which the motor vehicle (1) would be expected to tip over without a steering intervention.

6. Method according to any of the preceding claims,
**characterized in that**
by means of a sensor system (8, 9) of the motor vehicle (1), in particular an adaptive chassis control and/or a headlight range control, the motor vehicle (1) is monitored for a wheel lifting off of a surface being driven on and the cascade is applied on the basis thereof.

7. Method according to any of the preceding claims,
**characterized in that**
by means of an acceleration sensor system (7, 8, 9), in particular an adaptive chassis control (8), and/or by means of a rotation sensor system (9) of the motor vehicle (1), a tilting movement of the motor vehicle (1) is detected and application of the cascade is finely controlled on the basis of the detected tilting movement.

8. Method according to any of the preceding claims,
**characterized in that**
application of the different control interventions provided for in accordance with the cascade is coordinated by a driving dynamics controller (10) of the motor vehicle (1), which driving dynamics controller is configured to simulate whether a current trajectory of the motor vehicle (1), with respective current operating parameters and/or with application of certain control interventions, can be traversed without the motor vehicle (1) tipping over.

9. Control device (10) for a motor vehicle (1), having an interface (12) for detecting parameter values of parameters that each describe a current driving situation of the motor vehicle (1) and for outputting control signals for controlling the motor vehicle (1), and a data processing apparatus (13, 14) for processing the detected parameter values to determine a risk of the motor vehicle (1) tipping over and to generate the control signals in accordance with a predetermined cascade of control interventions, wherein the control device (10) is configured to automatically carry out a method according to any of the preceding claims.

10. Motor vehicle (1), having an electric steering system (3, 4) in which there is no mechanical connection between a steering wheel (2) and steered wheels (5) of the motor vehicle (1), having a controllable braking apparatus (6) and having a control device (10) according to claim 9 configured to control the electric steering system (3, 4) and the braking apparatus (6).

## Revendications

1. Procédé permettant d'éviter un basculement d'un véhicule automobile (1) qui présente une direction électrique (3, 4) sans liaison mécanique entre un volant de direction (2) et des roues directrices (5) du véhicule automobile (1), dans lequel, automatiquement,
- des paramètres prédéfinis qui décrivent une situation de conduite respectivement actuelle du véhicule automobile (1) sont surveillés et analysés à l'aide de critères prédéfinis en vue d'un risque de basculement,
- en cas de reconnaissance d'un risque de basculement, une cascade échelonnée prédéfinie de plusieurs interventions de commande automatiques différentes est exécutée en escalade successivement dans le temps d'étape en étape de la cascade pour influencer la situation de conduite du véhicule automobile (1) jusqu'à ce qu'il n'existe plus de risque de basculement, dans lequel la cascade prévoit
- lors d'une première étape, une limitation d'une vitesse de direction de la direction électrique (3, 4) à une valeur maximale prédéfinie,
- lors d'une deuxième étape, une limitation d'un angle de direction de la direction électrique (3, 4) à un premier angle de direction maximal prédéfini, et
- lors d'une troisième étape, une limitation de l'angle de braquage à un second angle de braquage maximal prédéfini plus petit et, dans la mesure où l'angle de braquage réel est supérieur au second angle de braquage maximal, une réduction active de l'angle de braquage réel au moins jusqu'au second angle de braquage maximal et une intervention de freinage active pour la réduction d'une vitesse de conduite du véhicule automobile (1).

2. Procédé selon la revendication 1,
**caractérisé en ce que**
la cascade prévoit également, lors de la première étape et/ou de la deuxième étape, une intervention de freinage active qui est plus faible que l'intervention de freinage active prévue lors de la troisième étape.

3. Procédé selon l'une des revendications précédentes,
**caractérisé en ce que**
la cascade prévoit également, lors d'au moins une étape, une limitation d'une réaction du véhicule automobile (1) à un signal d'accélération d'un conducteur.

4. Procédé selon la revendication 3,
**caractérisé en ce que**
la cascade prévoit, lors de la première étape et/ou de la deuxième étape, une première limitation plus faible de la réaction et, lors de la troisième étape, une seconde limitation plus forte de la réaction.

5. Procédé selon l'une des revendications précédentes,
**caractérisé en ce que**
l'escalade est effectuée d'étape en étape en fonction d'un moment de basculement probable auquel le véhicule automobile (1) basculerait probablement sans intervention de commande.

6. Procédé selon l'une des revendications précédentes,
**caractérisé en ce que**
au moyen d'un système de capteurs (8, 9) du véhicule automobile (1), en particulier d'un réglage adaptatif du châssis et/ou d'un réglage de la portée des phares, on surveille le véhicule automobile (1) pour détecter un soulèvement d'une roue d'un sol sur lequel ledit véhicule circule et on utilise la cascade en fonction de ladite surveillance.

7. Procédé selon l'une des revendications précédentes,
**caractérisé en ce que**
au moyen d'un système de capteurs d'accélération (7, 8, 9), en particulier d'un réglage adaptatif du châssis (8), et/ou au moyen d'un système de capteurs de rotation (9) du véhicule automobile (1), un mouvement de basculement du véhicule automobile (1) est détecté et une utilisation de la cascade est commandée de manière précise en fonction du mouvement de basculement détecté.

8. Procédé selon l'une des revendications précédentes,
**caractérisé en ce que**
une utilisation des différentes interventions de commande prévues conformément à la cascade est coordonnée par un régulateur de dynamique de conduite (10) du véhicule automobile (1) qui est configuré pour simuler le fait qu'une trajectoire respectivement actuelle du véhicule automobile (1) peut être parcourue ou non avec des paramètres de fonctionnement respectivement actuels et/ou en utilisant des interventions de commande déterminées sans basculement du véhicule automobile (1).

9. Dispositif de commande (10) pour un véhicule automobile (1), présentant une interface (12) pour la détection de valeurs de paramètres de paramètres qui décrivent une situation de conduite respectivement actuelle du véhicule automobile (1), et pour l'émission de signaux de commande pour la commande du véhicule automobile (1), et un appareil de traitement de données (13, 14) pour le traitement des valeurs de paramètres détectées pour la définition d'un risque de basculement du véhicule automobile (1) et pour la génération des signaux de commande conformément à une cascade prédéfinie d'interventions de commande, dans lequel le dispositif de commande (10) est configuré pour exécuter automatiquement un procédé selon l'une des revendications précédentes.

10. Véhicule automobile (1), présentant une direction électrique (3, 4) sans liaison mécanique entre un volant de direction (2) et des roues directrices (5) du véhicule automobile (1), un appareil de freinage (6) pouvant être commandé et un dispositif de commande (10) selon la revendication 9 qui est configuré pour commander la direction électrique (3, 4) et l'appareil de freinage (6).
